(19) **Europäisches Patentamt**
**European Patent Office**
**Office européen des brevets**

(11) **EP 3 343 421 A1**

(12) **EUROPEAN PATENT APPLICATION**

(43) Date of publication:
04.07.2018 Bulletin 2018/27

(51) Int Cl.:
**G06F 21/55** (2013.01)      **G06F 21/56** (2013.01)
**H04L 29/06** (2006.01)

(21) Application number: 17208811.4

(22) Date of filing: 20.12.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 27.12.2016 US 201615390915

(71) Applicant: General Electric Company
Schenectady, NY 12345 (US)

(72) Inventor: LE, Tam Khanh
San Ramon, CA 94583-9130 (US)

(74) Representative: Illingworth-Law, William
Illingworth
Global Patent Operation - Europe
GE International Inc.
The Ark, 201 Talgarth Road
Hammersmith
GB-London W6 8BJ (GB)

(54) **SYSTEM TO DETECT MACHINE-INITIATED EVENTS IN TIME SERIES DATA**

(57) In some embodiments, a network event initiation detection engine 250 may access a time series event data store 260 containing indications for each of a series of received network events, including a time value. The network event initiation detection engine 250 may then perform a statistical analysis on the information in the time series event data store 260, including the time values. The statistical analysis may be, for example, associated with durations of time existing between events. Based on the statistical analysis, a result may be output associated with a network event initiation likelihood. The result might indicate, for example, that an event was machine-initiated, human-initiated, etc.

300

FIG. 3

Printed by Jouve, 75001 PARIS (FR)

## Description

BACKGROUND

The invention relates generally to systems and methods to detect machine-initiated events in time series data. In particular, embodiments may facilitate an automated detection of non-human behavior via a time series analysis using statistical sampling.

An enterprise may be interested in detecting whether network events (*e.g.*, incoming network traffic, requests, data packets, *etc.*) were initiated by a machine by a human. For example, some events might be more likely to be recognized as being associated with a cyber threat if it is understood that the events were originated by a machine (rather than by a human). Similarly, an enterprise might want to recognize when competitor is using an automated process to gather information (*e.g.*, pricing information about products or services). As another example, an enterprise might want to determine if a particular machine (or type of machine) or a particular human is initiating events to enhance security features. Thus, it may be desirable to provide systems and methods to automatically facilitate detection of machine-initiated events in an efficient and accurate manner.

BRIEF DESCRIPTION

Some embodiments are associated with a network event initiation detection engine that accesses a time series event data store containing indications for each of a series of received network events, including a time value. The network event initiation detection engine may then perform a statistical analysis on the information in the time series event data store, including the time values. The statistical analysis may be, for example, associated with durations of time existing between events. Based on the statistical analysis, a result may be output associated with a network event initiation likelihood. The result might indicate, for example, that an event was machine-initiated, human-initiated, *etc.*

Some embodiments are associated with: means for accessing a time series event data store containing indications for each of a series of received network events, including a time value; means for performing a statistical analysis on the information in the time series event data store, including the time values, the statistical analysis being associated with durations of time existing between events; and, based on the statistical analysis, means for outputting a result associated with a network event initiation likelihood.

A technical feature of some embodiments is a computer system and method that automatically facilitates detection of machine-initiated events in an efficient and accurate manner.

Other embodiments are associated with systems and/or computer-readable medium storing instructions to perform any of the methods described herein.

DRAWINGS

FIG. 1 is a high level block diagram of a system.

FIG. 2 is a block diagram of a system according to some embodiments.

FIG. 3 is a flow chart of a method in accordance with some embodiments.

FIG. 4 includes timelines representing machine-initiated events and human initiated events in accordance with some embodiments.

FIG. 5 illustrates data processing according to some embodiments.

FIG. 6 is a block diagram of a system according to another embodiment.

FIG. 7 includes timelines representing machine-initiated events and human initiated events in accordance with some embodiments.

FIG. 8 illustrates data processing according to some embodiments.

FIG. 9 is an interactive graphical user display that might be provided in accordance with some embodiments.

FIG. 10 is an apparatus that may be provided in accordance with some embodiments.

FIG. 11 is a tabular view of a portion of a time series database in accordance with some embodiments of the present invention.

FIG. 12 illustrates a method of determining if a series of events have been initiated by a machine in accordance with some embodiments.

FIG. 13 illustrates a method of determining whether a series of events are associated with a common machine or human according to some embodiments.

DETAILED DESCRIPTION

Some embodiments disclosed herein automatically facilitate detection of machine-initiated events in an efficient and accurate manner. Some embodiments are associated with systems and/or computer-readable medium that may help perform such a method.

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

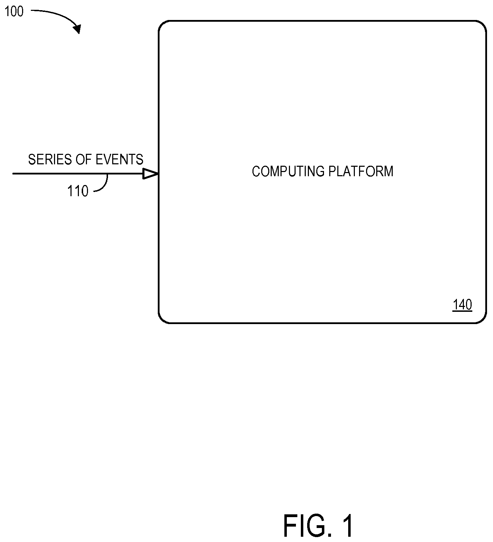

An enterprise, such as a business, may be interested in detecting whether network events (*e.g.*, incoming network traffic, requests, data packets) were initiated by a machine or by a human. FIG. 1 is a high level block diagram of a system 100 that might be employed by such an enterprise. The system 100 includes a computing platform 140 that receives s series of events 110 via a network and may, in some cases, transmit one or more result to client platforms (e.g., workstations, mobile computers, smartphones, *etc.).*

Some events in the series of events 110 might be more likely to be recognized as being associated with a cyber threat if it is understood that the events were originated by a machine (rather than by a human). For example, a Denial Of Service ("DOS") might use an automated platform to continuously send messages to the computing platform 140 in an attempt to disrupt service. Similarly, an enterprise might want to recognize that when competitor is using an automated process to gather information from the computing platform 140 *(e.g.,* pricing information about products or services). As another example, an enterprise might want to determine if a particular machine (or type of machine) or a particular human is initiating events to enhance security features for the computing platform 140.

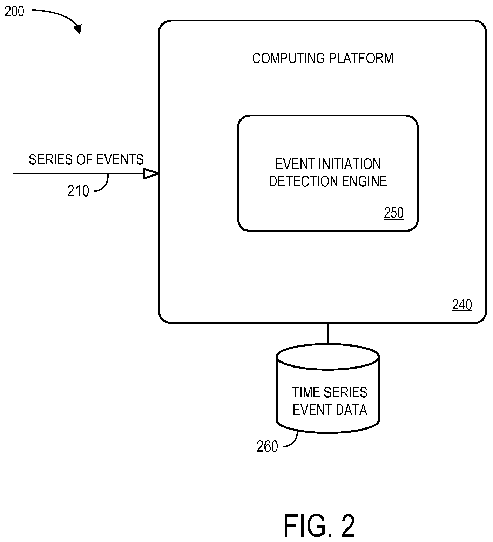

Thus, it may be desirable to provide systems and methods to automatically facilitate detection of machine-initiated events in an efficient and accurate manner. To help address this need, FIG. 2 is a block diagram of a system 100 according to some embodiments described herein. As before, a computing platform 240 may receive a series of events 210 from a network (e.g., via an input communication port). In this embodiment, the computing platform 140 includes an event detection engine 250 that is able to access time series event data 260. According to some embodiments, the event initiation detection engine 150 may also exchange information with remote a remote user (*e.g.*, via a firewall). According to some embodiments, a back-end application computer server may facilitate viewing, receiving, and/or interacting with the event initiation detection engine 250 via one or more terminals associated with the user. According to some embodiments, the event initiation detection engine 250 (and/or other devices described herein) might be associated with a third party, such as a vendor that performs a service for an enterprise.

The computing platform 240, event initiation detection engine 250, and time series event data 260 and/or other devices described herein might be, for example, associated with a Personal Computer ("PC"), laptop computer, smartphone, an enterprise server, a server farm, a database or similar storage devices, and/or any device capable of sending network traffic. Note that the detection described herein might apply for any automated process, including Internet of Things ("IoT"), Industrial IoT ("IIoT"), and any device that can connect to a communication network. According to some embodiments, an "automated" event initiation detection engine 250 may facilitate an automated detection of machine-initiated events (and/or human-initiated events) in the series of events 210. As used herein, the term "automated" may refer to, for example, actions that can be performed with little (or no) intervention by a human.

As used herein, devices, including those associated with the event initiation detection engine 250 and/or any other device described herein, may exchange information via any communication network which may be one or more of a Local Area Network ("LAN"), a Metropolitan Area Network ("MAN"), a Wide Area Network ("WAN"), a proprietary network, a Public Switched Telephone Network ("PSTN"), a Wireless Application Protocol ("WAP") network, a Bluetooth network, a wireless LAN network, and/or an Internet Protocol ("IP") network such as the Internet, an intranet, or an extranet. Note that any devices described herein may communicate via one or more such communication networks.

The event initiation detection engine 250 may store information into and/or retrieve information from the time series event data 260. The time series event data 260 might, for example, store electronic records associated with incoming network traffic including time data, origination addresses, destination addresses, message size, *etc.* According to some embodiments, a system might not look at just an interval between events but also (or instead) attributes describing the contents, such as message size which could be available in network traffic logs. The time series event data 260 may be locally stored or reside remote from the computing platform 240 and/or the event initiation detection engine 250. As will be described further below, the time series event data 260 may be used by the event initiation detection engine 250 to help detect machine-initiated events. Although a single event initiation detection engine 250 is shown in FIG. 2, any number of such devices may be included. Moreover, various devices described herein might be combined according to embodiments of the present invention. For example, in some embodiments, the computing platform 240, the event initiation detection engine 250, and the time series event data 260 might be co-located and/or may comprise a single apparatus.

The system 200 may be associated with a method to identify, in any time series sequence, when an observed activity should be attributed to non-human behavior ("machine-initiated" events). This may allow for positive (or probable) identification of not only machine activity (e.g., initiated by bots or scripts) on networks and regularly scheduled jobs, but also of a set of activities that is definitively (or likely) performed by a human. In addition, a process of identifying human vs. non-human activity may provide a statistical fingerprint to match one group of events to another, thereby confirming that both groups of activity explicitly originated from a single bot, job, human user, *etc.* Some embodiments described herein may address deficiencies in prior art, such as by: only requiring very small sample size, providing an ability to operate on any time series data (regardless of content), the ability to sample data out-of-sequence, the ability to sample data with long gaps or missing data, and/or realizing higher algorithmic robustness (in being able to withstand missing data and/or time series randomization). Note that one aspect of the sampling method described herein may be that data points don't need to be continuous and can also have gaps. For example, a system might look at a machine's activity between 1:00 PM and 1:05 PM and then later between 11:00 PM and 11:05 PM and combine those pieces into a 10 minute sample *(e.g.,* as long as the source and destination address are the same - thus indicating that it is likely the same system performed the communication). Such an approach might be appropriate, for example, in scenarios such as satellite data evaluation or collecting data from a damaged system (where the available time series data is only available in parts).

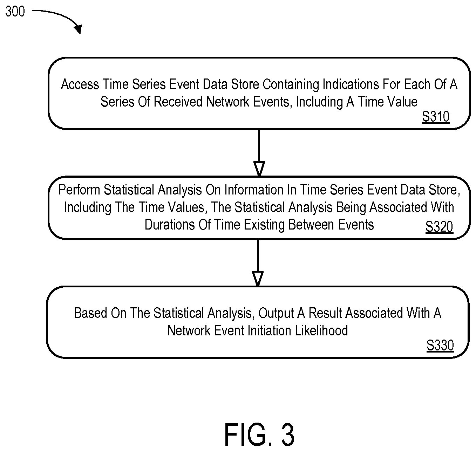

Note that the system 200 of FIG. 2 is provided only as an example, and embodiments may be associated with additional elements or components. According to some embodiments, the elements of the system 200 automatically facilitate detection of machine-initiated events in an efficient and accurate manner. Consider, for example, FIG. 3 which is a flow chart of a method 300 associated with a method in accordance with some embodiments. The flow charts described herein do not imply a fixed order to the steps, and embodiments of the present invention may be practiced in any order that is practicable. Note that any of the methods described herein may be performed by hardware, software, or any combination of these approaches. For example, a non-transitory computer-readable storage medium may store thereon instructions that when executed by a machine result in performance according to any of the embodiments described herein.

At S310, a network event initiation detection engine may access a time series event data store. The time series event data store might contain, for example, indications for each of a series of received network events, including a time value. Note that the network events may be associated with a command and control node that receives messages from a network, including encrypted data. According to some embodiments, the time series event data store is associated with at least one or an event log with timestamps, a firewall log, a network access control log, a host log, *etc.*

At S320, the system may perform a statistical analysis on the information in the time series event data store, including the time values. According to some embodiments, the statistical analysis may be associated with durations of time existing between events. As will be described in more detail, according to some embodiments the statistical analysis is associated with the Kolmogorov-Smirnov ("K-S") test. According to some embodiments, the time series event data store further contains an origination address for each event. In this case, the statistical analysis might be further based on the origination addresses.

Based on the statistical analysis, the system may output a result associated with a network event initiation likelihood at S330. For example, the result might be an indication that an event was machine-initiated (e.g., the result may be associated with cyber-threat detection). According to some embodiments, the result comprises an indication that the event was initiated by a particular machine. Note that as used herein the term "machine" might refer to, for example, a software program, a script, a bot, a scheduled job, a computer virus, malware, *etc.* According to other embodiments, the result might be an indication that an event was human-initiated. For example, the result might comprise an indication that the even was initiated by a particular person.

Note that embodiments may identify similar variances in "duration" for any activity. A simple example may be a connection from a source IP address to a target IP address over time. The "duration" in that case might represent the time in between each connection. Non-human activity may have more regular connection patterns as compared to human activity. Such non-human activity might be, in some cases, originating from a malicious bot connecting to a command and control node or from a legitimate program such as an instant messenger application (or a Dropbox® application performing a synchronization process).

The "duration" or time interval may be statistically measured to identify:

whether an activity was initiated by a human or a non-human machine; and/or

whether one stream of activity is emanating from a same actor as a prior activity (e.g., "are these two sets of footprints from the same person, based on their size and interval distance?").

According to some embodiments, the data is normalized to determine "interval" information and the K-S test is applied to time-series network activity (e.g., event logs).

The K-S test is a nonparametric test of an equality of continuous, one-dimensional probability distributions that may be used to compare a sample with a reference probability distribution (one-sample K-S test) or to compare two samples (two-sample K-S test). Note that the K-S statistic quantifies a distance between an empirical distribution function of a sample and a cumulative distribution function of a reference distribution (or between empirical distribution functions of two samples). The null distribution of this statistic may be calculated under the null hypothesis that the sample is drawn from the reference distribution (in the one-sample case) or that the samples are drawn from the same distribution (in the two-sample case).

The empirical distribution function $F_n$ for n iid observations Xi may be defined as:

$$F_n(x) = \frac{1}{n} \sum_{i=1}^{n} I_{[-\infty,x]}(X_i)$$

where $I_{[-\infty,x]}(X_i)$ is the indicator function, equal to 1 if $X_i \leq x$ and equal to 0 otherwise. The K-S statistic for a given cumulative distribution function F(x) is:

$$D_n = sup_x |F_n(x) - F(x)|$$

where $sup_x$ is the supremum of the set of distances. The Kolmogorov distribution is the distribution of the random variable:

$$K = sup_{t \in |0,1|} |B(t)|$$

where B(t) is the Brownian bridge.

Note that the K-S test may be used to test whether two underlying one-dimensional probability distributions differ. In this case, the K-S statistic is:

$$D_{n,n\prime} = sup_x |F_{1,n}(x) - F_{2,n\prime}(x)|$$

where $F_{1,n}$ and $F_{2,n\prime}$ are the empirical distribution functions of the first and second sample respectively, and *sup* is the supremum function.

The null hypothesis is rejected at level $\alpha$ if:

$$D_{n,n\prime} > c(\alpha) \sqrt{\frac{n + n\prime}{nn\prime}}$$

where n and n' are the sizes of the first and second sample, respectively. Note that the two-sample test checks whether the two data samples come from the same distribution.

A two-sample K-S test may provide a useful and general nonparametric method to compare two samples (*e.g.,* because it is sensitive to differences in both location and shape of the empirical cumulative distribution functions of the two samples) and may help separate human activities from machine-initiated activities. Note that knowing whether a set of actions is from a human actor (or from a machine) may be an important attribute for threat monitoring.

Also note that analytics on IT data often require a priori knowledge in the form of signatures (or patterns) to differentiate between normal and suspicious (or malicious) activity. Moreover, compromised systems almost always have one common component: a connection (or attempted connection) to a remote command and control node. As malware is becoming more sophisticated with respect to how detection of command and control communication is avoided -- including implementing random sleep timers, utilizing common applications such as Twitter® and HTTP to connect outbound, and/or encrypting the payload to avoid detection - some embodiments described herein may help identify beaconing behavior without any knowledge of the underlying malware's behavior itself. Moreover, embodiments might not require any visibility of the payload (so it would not matter if the payload is encrypted).

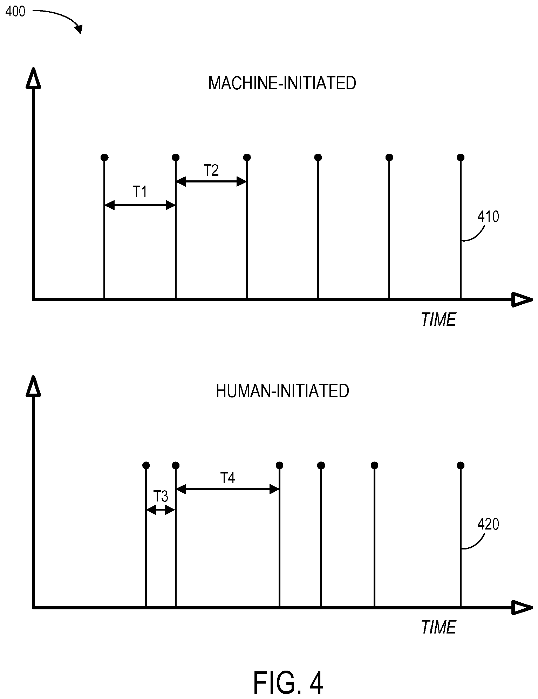

The K-S test may help identify "regular" or "periodic" actions that occur in a predictable way. For example, FIG. 4 includes timelines 400 representing machine-initiated events 410 and human-initiated events 420 in accordance with some embodiments. In particular, a first timeline illustrates machine-initiated events 510 while a second timeline illustrates human-initiated events 420. Note that the time differences in the first timeline (*e.g.,* T1 and T2) are identical while the time differences in the second timeline (*e.g.,* T3 and T4) are not. This type of pattern can be used to help identify machine-initiated events.

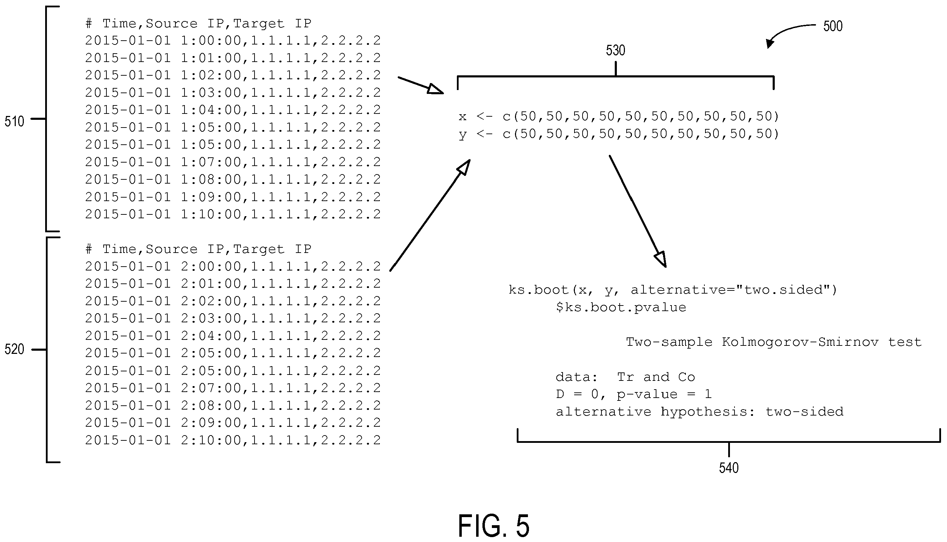

For example, FIG. 5 illustrates data processing 500 according to some embodiments. Input time series event data 510, 520 include a time value (*e.g.,* a date and time-of-day), a source IP address, and a target IP address. Note that the data 510, 520 illustrated in FIG. 5 is associated with a K-S test that will generate a 100% p;-value because a prototypical automated beacon occurs every 60 seconds. This data 510, 520 is used to determine the time duration between events 530 (or data points): 60 sec, 60 sec, 60 sec, *etc.* The time duration between events 530 can then be feed to a process 540 that will generate a result (indicating that the input time series event data 510, 520 was most likely machine-initiated).

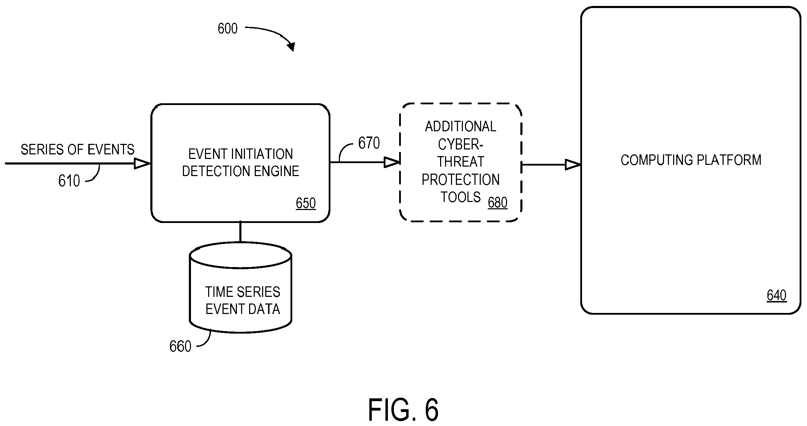

FIG. 6 is a block diagram of a system 600 according to another embodiment. As before, a computing platform 640 may receive a series of events 610 from a network. In this embodiment, the system includes an event detection engine 650 separate from the computing platform 640 that is able to intercept the incoming data traffic and is also able to access time series event data 660. The event initiation detection engine 650 and time series event data 660 might be, for example, associated with a PC, laptop computer, smartphone, an enterprise server, a server farm, and/or a database or similar storage devices. As used herein, devices, including those associated with the event initiation detection engine 650, may exchange information via any communication network.

The event initiation detection engine 650 may store information into and/or retrieve information from the time series event data 660. The time series event data 660 might, for example, store electronic records associated with incoming network traffic including time data, origination addresses, destination addresses, *etc.* The time series event data 660 may be used by the event initiation detection engine 650 to help detect machine-initiated events. That is, the system 600 may be associated with a method to identify, in any time series sequence, when an observed activity should be attributed to non-human behavior ("machine-initiated" events). According to some embodiments, the system 600 may further include additional cyber-threat protection tools 680 in addition to the event initiation detection engine 650 (and these elements may, in some cases, work together to enhance security).

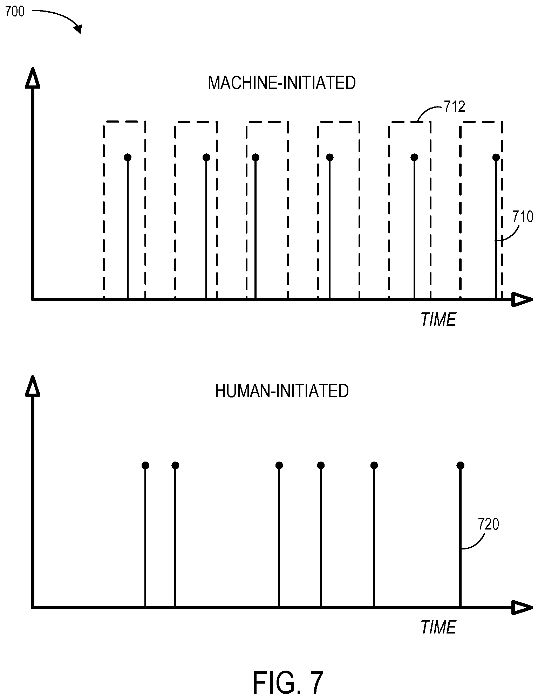

Note that some bots or automated applications may not be perfectly cyclic and may have variations between connections. For example, an application might use a random sleep time of 2 to 10 seconds (in a 60 second beacon) but still generate a highly accurate prediction based on the p-value. FIG. 7 includes timelines 700 representing machine-initiated events 710 and human-initiated events 720 in accordance with some embodiments. In particular, a first timeline illustrates machine-initiated events 710 utilizing a random sleep timer (within a range 712) while a second timeline illustrates human-initiated events 720. Note that the time differences in the first timeline, while not identical, are more periodic and/or predictable as compared to the time differences in the second timeline. Even this type of pattern can be used to help identify machine-initiated events.

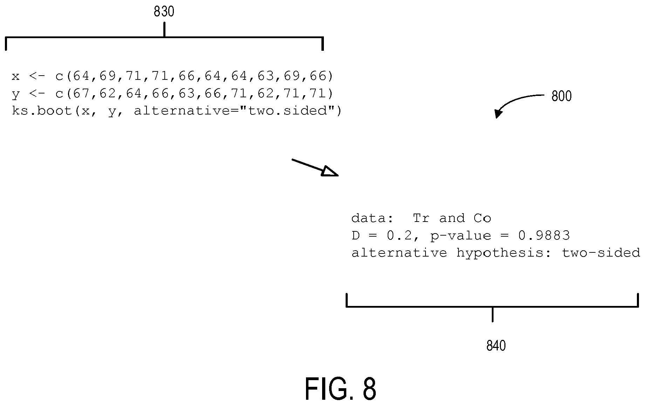

FIG. 8 illustrates data processing 800 according to some embodiments. Input time series event data may include, for example, a time value *(e.g.,* a date and time-of-day), a source IP address, and a target IP address. This data may then be processed to determine the time duration between events 830 (or data points): 64 sec, 69 sec, 71 sec, *etc.* The time duration between events 830 can then be feed to a process 840 that will generate a result (indicating that the input time series event data was most likely machine-initiated). Note that the data 830 illustrated in FIG. 8 is associated with a K-S test that will generate less than a 100% p;-value because the automated beacon does not occur exactly every 60 seconds (due to the random sleep timer).

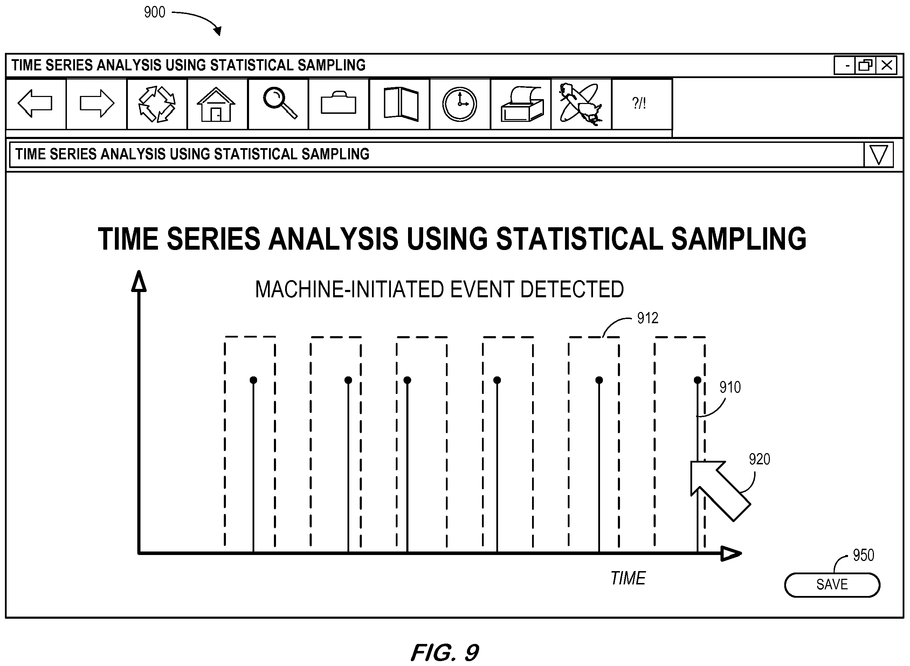

According to some embodiments, an event initiation detection engine may exchange information with a remote user *(e.g.,* via a remote management console connected through a firewall). According to some embodiments, a back-end application computer server may facilitate viewing, receiving, and/or interacting with the event initiation detection engine via one or more terminals associated with the user. For example, FIG. 9 is an interactive graphical user display 900 that might be provided in accordance with some embodiments. The display 900 is associated with a time series analysis using statistical sampling and includes a timeline illustrating why machine-initiated events 910 have been detected (e.g., because they fall within random sleep time windows 912). According to some embodiments, selection of a graphical element on the display 900 with a computer mouse or pointer 920 might result in a pop-up display of more detailed information that allows for a user adjustment of parameters. Moreover, computer icons 950 may let a user save data, export data, generate repots, *etc.*

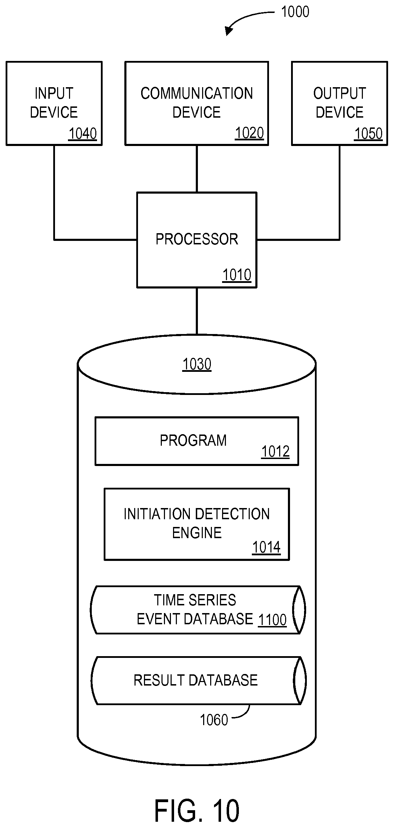

The embodiments described herein may be implemented using any number of different hardware configurations. For example, FIG. 10 illustrates an apparatus 1000 that may be, for example, associated with the systems 200, 600 of FIGS. 2 and 6, respectively. The apparatus 1000 comprises a processor 1010, such as one or more commercially available Central Processing Units (CPUs) in the form of one-chip microprocessors, coupled to a communication device 1060 configured to communicate via a communication network (not shown in FIG. 10). The apparatus 1000 further includes an input device 1040 *(e.g.,* a mouse and/or keyboard to enter information about a computing platform, network addresses, events, *etc.)* and an output device 1050 *(e.g.,* a computer monitor to output interactive user displays and reports).

The processor 1010 also communicates with a storage device 1030. The storage device 1030 may comprise any appropriate information storage device, including combinations of magnetic storage devices *(e.g.,* a hard disk drive), optical storage devices, mobile telephones, and/or semiconductor memory devices. The storage device 1030 stores a program 1012 and/or an initiation detection engine 1014 for controlling the processor 1010. The processor 1010 performs instructions of the programs 1012, 1014, and thereby operates in accordance with any of the embodiments described herein. For example, the processor 1010 might access a time series event data store containing indications for each of a series of received network events, including a time value. The processor 1010 may then perform a statistical analysis on the information in the time series event data store, including the time values. The statistical analysis may be, for example, associated with durations of time existing between events. Based on the statistical analysis, the processor 1010 may output a result associated with a network event initiation likelihood. The result might indicate, for example, that an event was machine-initiated, human-initiated, *etc.*

The programs 1012, 1014 may be stored in a compressed, uncompiled and/or encrypted format. The programs 1012, 1014 may furthermore include other program elements, such as an operating system, a database management system, and/or device drivers used by the processor 1010 to interface with peripheral devices.

As used herein, information may be "received" by or "transmitted" to, for example: (i) the apparatus 1000 from another device; or (ii) a software application or module within the apparatus 1000 from another software application, module, or any other source.

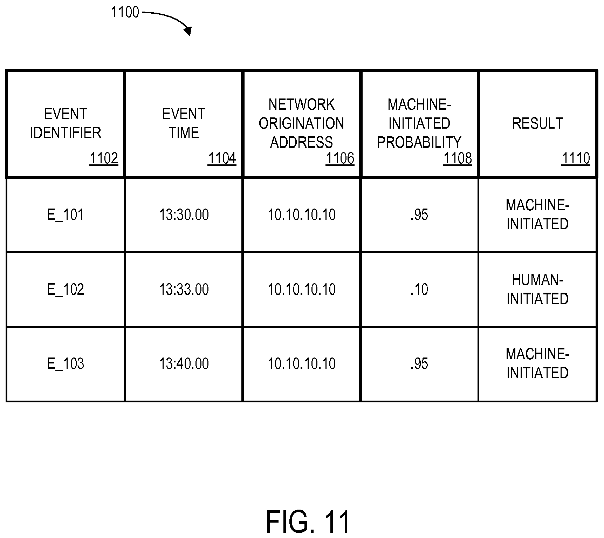

As shown in FIG. 10, the storage device 1030 also stores a time series event database 1100 and a result database 1060. One example of the time series event database 1100 that may be used in connection with the apparatus 1000 will now be described in detail with respect to FIG. 11. The illustration and accompanying descriptions of the database presented herein is exemplary, and any number of other database arrangements could be employed besides those suggested by the figures.

FIG. 11 is a tabular view of a portion of the time series event database 1100 in accordance with some embodiments of the present invention. The table includes entries associated with events that have occurred/been received via a network. The table also defines fields 1106, 1104, 1106, 1108, 1110 for each of the entries. The fields specify: an event identifier 1102, an event time 1104, a network origination address 1106, a machine-initiated probability 1108, and a result 1110. The information in the time series event database 1100 may be periodically created as new events occur, are received, and are statistically analyzed by the system.

The event identifier 1106 might be a unique alphanumeric code identifying an event that has occurred *(e.g.,* a message or data packet has been received via a network). The event time 1104 may indicate when the event occurred and the network origination address 1106 might indicate where the event came from (and/or who created the event). The machine-initiated probability 1108 may be based on a K-S test analysis of the data, and the result 1110 might indicate if the system predicts that the event was machine-initiated or human-initiated (*e.g*., based on a comparison of the machine-initiated probability 1108 and a threshold value).

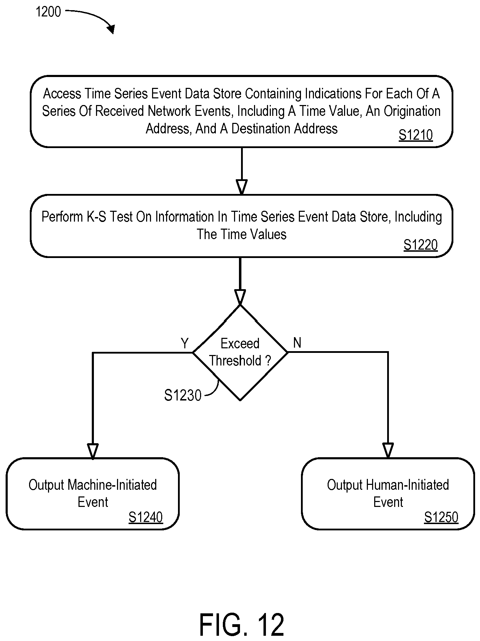

Note that some embodiments may use a threshold value to predict if an event is machine-initiated or human-initiated. For example, FIG. 12 illustrates a method 1200 of determining if a series of events have been initiated by a machine in accordance with some embodiments. At S1120, the system may access a time series event data store containing indications for each of a series of received network events. The indications might include, for example, a time value, an original address, a destination address, and/or attributes about the message contents (*e.g.*, message size). At S1220, the system may perform a K-S test on information in the time series event data store, including the time values. At S1230, the system may determine if the result of the K-S test exceeds a threshold value. If so, the system outputs a "machine-initiated event" result at S1240. If the threshold value is not exceeded at S1230, the system outputs a "human-initiated" event" result at S1250. Note that embodiments might be associated with more than two types of results. Other results might include, for example, "unsure of initiation," "highly likely to be human-initiated," *etc.*

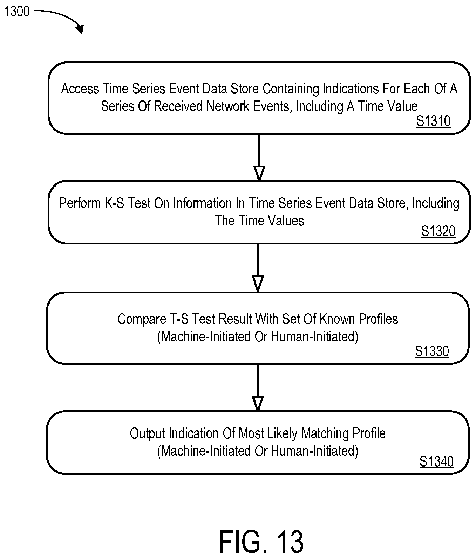

Some embodiments might determine if an event (or a series of events) is associated with a particular human or a particular machine. For example, FIG. 13 illustrates a method 1300 of determining whether a series of events are associated with a common machine or human according to some embodiments. At S1310, the system may access a time series event data store containing indications for each of a series of received network events. The indications might include, for example, a time value, an original address, and/or a destination address. At S1320, the system may perform a K-S test on information in the time series event data store, including the time values. At S1330, the system may compare K-S test result with a set of known profiles (including, for example, machine-initiated and/or human-initiated profiles). The system may then output an indication of the most likely matching profile at S1340. The output might, for example, indicate a particular machine or a particular human as being a likely source of an event (or series of events).

The following illustrates various additional embodiments of the invention. These do not constitute a definition of all possible embodiments, and those skilled in the art will understand that the present invention is applicable to many other embodiments. Further, although the following embodiments are briefly described for clarity, those skilled in the art will understand how to make any changes, if necessary, to the above-described apparatus and methods to accommodate these and other embodiments and applications.

Although specific hardware and data configurations have been described herein, note that any number of other configurations may be provided in accordance with embodiments of the present invention (*e.g.,* some of the information associated with the databases and apparatus described herein may be split, combined, and/or handled by external systems). Applicants have discovered that embodiments described herein may be particularly useful in connection with cyber threat protection systems, although embodiments may be used in connection other any other type of networked system.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:

    1. A system, comprising:

an input port to receive a series of network events over time;

a time series event data store containing indications for each of a series of received network events, including a time value; and

a network event initiation detection engine, coupled to the input port and the time series event data store, configured to:

access the time series event data store;

perform a statistical analysis on the information in the time series event data store, including the time values, the statistical analysis being associated with durations of time existing between events; and

based on the statistical analysis, outputting a result associated with a network event initiation likelihood.

2. The system of clause 1, wherein the statistical analysis is associated with the Kolmogorov-Smirnov test.

3. The system of any preceding clause, wherein the result comprises an indication that an event was machine-initiated.

4. The system of any preceding clause, wherein the result is associated with cyber-threat detection.

5. The system of any preceding clause, wherein the result comprises an indication that the event was initiated by a particular machine.

6. The system of any preceding clause, wherein the machine initiating the events comprises at least one of: (i) a software program, (ii) a script, (iii) a bot, (iv) a scheduled job, (v) a computer virus, and (vi) malware.

7. The system of any preceding clause, wherein the result comprises an indication that an event was human-initiated.

8. The system of any preceding clause, wherein the result comprises an indication that the even was initiated by a particular person.

9. The system of any preceding clause, wherein the time series event data store further contains an origination address for each event and said statistical analysis is further based on the origination addresses.

10. The system of any preceding clause, wherein the network events are associated with a command and control node.

11. The system of any preceding clause, wherein the time series event data store is associated with at least one of: (i) an event log with timestamps, (ii) a firewall log, (iii) a network access control log, and (iv) a host log.

12. A computer-implemented method, comprising:

accessing, by a network event initiation detection engine, a time series event data store containing indications for each of a series of received network events, including a time value;

performing, by the network event initiation detection engine, a statistical analysis on the information in the time series event data store, including the time values, the statistical analysis being associated with durations of time existing between events; and

based on the statistical analysis, outputting a result associated with a network event initiation likelihood.

13. The method of any preceding clause, wherein the statistical analysis is associated with the Kolmogorov-Smirnov test.

14. The method of any preceding clause, wherein the result comprises at least one of: (i) an indication that an event was machine-initiated, (ii) cyber-threat detection, and (iii) an indication that the event was initiated by a particular machine.

15. The method of any preceding clause, wherein the result comprises at least one of: (i) an indication that an event was human-initiated, and an indication that the even was initiated by a particular person.

16. The method of any preceding clause, wherein the time series event data store further contains an origination address for each event and said statistical analysis is further based on the origination addresses.

17. A non-transitory, computer-readable medium storing instructions that, when executed by a computer processor, cause the computer processor to perform a method, the method comprising:

accessing, by a network event initiation detection engine, a time series event data store containing indications for each of a series of received network events, including a time value;

performing, by the network event initiation detection engine, a statistical analysis on the information in the time series event data store, including the time values, the statistical analysis being associated with durations of time existing between events; and

based on the statistical analysis, outputting a result associated with a network event initiation likelihood.

18. The medium of any preceding clause, wherein the statistical analysis is associated with the Kolmogorov-Smirnov test.

19. The medium of any preceding clause, wherein the network events are associated with a command and control node.

20. The medium of any preceding clause, wherein the time series event data store is associated with at least one of: (i) an event log with timestamps, (ii) a firewall log, (iii) a network access control log, and (iv) a host log.

**Claims**

1. A system (200), comprising:

    an input port to receive a series of network events over time;
    a time series event data store (260) containing indications for each of a series of received network events, including a time value; and
    a network event initiation detection engine (250), coupled to the input port and the time series event data store (260), configured to:

        access the time series event data store (260);
        perform a statistical analysis on the information in the time series event data store (260), including the time values, the statistical analysis being associated with durations of time existing between events; and
        based on the statistical analysis, outputting a result associated with a network event initiation likelihood.

2. The system (200) of claim 1, wherein the statistical analysis is associated with the Kolmogorov-Smirnov test.

3. The system (200) of claim 1 or claim 2, wherein the result comprises an indication that an event was machine-initiated.

4. The system (200) of any preceding claim, wherein the result is associated with cyber-threat detection.

5. The system (200) of any preceding claim, wherein the result comprises an indication that the event was initiated by a particular machine.

6. The system (200) of any preceding claim, wherein the machine initiating the events comprises at least one of: (i) a software program, (ii) a script, (iii) a bot, (iv) a scheduled job, (v) a computer virus, and (vi) malware.

7. The system (200) of any preceding claim, wherein the result comprises an indication that an event was human-initiated.

8. The system (200) of claim 6, wherein the result comprises an indication that the event was initiated by a particular person.

9. The system (200) of any preceding claim, wherein the time series event data store (260) further contains an origination address for each event and said statistical analysis is further based on the origination addresses.

10. The system (200) of any preceding claim, wherein the network events are associated with a command and control node.

11. The system (200) of any preceding claim, wherein the time series event data store (260) is associated with at least one of: (i) an event log with timestamps, (ii) a firewall log, (iii) a network access control log, and (iv) a host log.

12. A computer-implemented method, comprising:

    accessing, by a network event initiation detection engine, a time series event data store containing indications for each of a series of received network events, including a time value;
    performing, by the network event initiation detection engine, a statistical analysis on the information in the time series event data store, including the time values, the statistical analysis being associated with durations of time existing between events; and
    based on the statistical analysis, outputting a result associated with a network event initiation likelihood.

13. The method of claim 12, wherein the statistical analysis is associated with the Kolmogorov-Smirnov test.

14. The method of claim 12 or claim 13, wherein the result comprises at least one of: (i) an indication that an event was machine-initiated, (ii) cyber-threat detection, and (iii) an indication that the event was initiated by a particular machine.

15. A non-transitory, computer-readable medium storing instructions that, when executed by a computer processor, cause the computer processor to perform a method, the method comprising:

accessing, by a network event initiation detection engine, a time series event data store containing indications for each of a series of received network events, including a time value; performing, by the network event initiation detection engine, a statistical analysis on the information in the time series event data store, including the time values, the statistical analysis being associated with durations of time existing between events; and based on the statistical analysis, outputting a result associated with a network event initiation likelihood.

100

SERIES OF EVENTS

110

COMPUTING PLATFORM

140

FIG. 1

COMPUTING PLATFORM

EVENT INITIATION
DETECTION ENGINE

250

240

SERIES OF EVENTS

210

200

TIME SERIES
EVENT DATA

260

FIG. 2

300

Access Time Series Event Data Store Containing Indications For Each Of A
Series Of Received Network Events, Including A Time Value
S310

Perform Statistical Analysis On Information In Time Series Event Data Store,
Including The Time Values, The Statistical Analysis Being Associated With
Durations Of Time Existing Between Events          S320

Based On The Statistical Analysis, Output A Result Associated With A
Network Event Initiation Likelihood
S330

FIG. 3

400

MACHINE-INITIATED

T1

T2

410

TIME

HUMAN-INITIATED

T3

T4

420

TIME

FIG. 4

EP 3 343 421 A1

```
# Time,Source IP,Target IP
2015-01-01 1:00:00,1.1.1.1,2.2.2.2
2015-01-01 1:01:00,1.1.1.1,2.2.2.2
2015-01-01 1:02:00,1.1.1.1,2.2.2.2
2015-01-01 1:03:00,1.1.1.1,2.2.2.2
2015-01-01 1:04:00,1.1.1.1,2.2.2.2
2015-01-01 1:05:00,1.1.1.1,2.2.2.2
2015-01-01 1:05:00,1.1.1.1,2.2.2.2
2015-01-01 1:07:00,1.1.1.1,2.2.2.2
2015-01-01 1:08:00,1.1.1.1,2.2.2.2
2015-01-01 1:09:00,1.1.1.1,2.2.2.2
2015-01-01 1:10:00,1.1.1.1,2.2.2.2
```

510

```
# Time,Source IP,Target IP
2015-01-01 2:00:00,1.1.1.1,2.2.2.2
2015-01-01 2:01:00,1.1.1.1,2.2.2.2
2015-01-01 2:02:00,1.1.1.1,2.2.2.2
2015-01-01 2:03:00,1.1.1.1,2.2.2.2
2015-01-01 2:04:00,1.1.1.1,2.2.2.2
2015-01-01 2:05:00,1.1.1.1,2.2.2.2
2015-01-01 2:05:00,1.1.1.1,2.2.2.2
2015-01-01 2:07:00,1.1.1.1,2.2.2.2
2015-01-01 2:08:00,1.1.1.1,2.2.2.2
2015-01-01 2:09:00,1.1.1.1,2.2.2.2
2015-01-01 2:10:00,1.1.1.1,2.2.2.2
```

520

500

530

```
x <- c(50,50,50,50,50,50,50,50,50,50)
y <- c(50,50,50,50,50,50,50,50,50,50)
```

```
ks.boot(x, y, alternative="two.sided")
     $ks.boot.pvalue

              Two-sample Kolmogorov-Smirnov test

data:  Tr and Co
D = 0, p-value = 1
alternative hypothesis: two-sided
```

540

FIG. 5

SERIES OF EVENTS →

EVENT INITIATION
DETECTION ENGINE
650

610

670 →

ADDITIONAL
CYBER-
THREAT
PROTECTION
TOOLS 680

COMPUTING PLATFORM

640

TIME SERIES
EVENT DATA

660

600

## FIG. 6

FIG. 7

830

```
x <- c(64,69,71,71,66,64,64,63,69,66)
y <- c(67,62,64,66,63,66,71,62,71,71)
ks.boot(x, y, alternative="two.sided")
```

800

```
data:  Tr and Co
D = 0.2, p-value = 0.9883
alternative hypothesis: two-sided
```

840

## FIG. 8

EP 3 343 421 A1

900

TIME SERIES ANALYSIS USING STATISTICAL SAMPLING          - | ☐ | ✕

⬅  ➡  ♻  🏠  🔍  💼  📖  🕐  🖨  🛰  ?/!

TIME SERIES ANALYSIS USING STATISTICAL SAMPLING          ▽

# TIME SERIES ANALYSIS USING STATISTICAL SAMPLING

### MACHINE-INITIATED EVENT DETECTED

912

910

920

TIME

950

SAVE

*FIG. 9*

1000

| INPUT DEVICE 1040 | COMMUNICATION DEVICE 1020 | OUTPUT DEVICE 1050 |
|---|---|---|

PROCESSOR

1010

1030

PROGRAM 1012

INITIATION DETECTION ENGINE 1014

TIME SERIES EVENT DATABASE 1100

RESULT DATABASE

1060

FIG. 10

EP 3 343 421 A1

1100 —

| EVENT IDENTIFIER 1102 | EVENT TIME 1104 | NETWORK ORIGINATION ADDRESS 1106 | MACHINE- INITIATED PROBABILITY 1108 | RESULT 1110 |
|---|---|---|---|---|
| E_101 | 13:30.00 | 10.10.10.10 | .95 | MACHINE- INITIATED |
| E_102 | 13:33.00 | 10.10.10.10 | .10 | HUMAN- INITIATED |
| E_103 | 13:40.00 | 10.10.10.10 | .95 | MACHINE- INITIATED |

FIG. 11

1200

Access Time Series Event Data Store Containing Indications For Each Of A Series Of Received Network Events, Including A Time Value, An Origination Address, And A Destination Address    S1210

Perform K-S Test On Information In Time Series Event Data Store, Including The Time Values    S1220

Y    Exceed Threshold ?    N

S1230

Output Machine-Initiated Event    S1240

Output Human-Initiated Event    S1250

FIG. 12

1300

```
┌─────────────────────────────────────────────────────────────────┐
│ Access Time Series Event Data Store Containing Indications For     │
│ Each Of A Series Of Received Network Events, Including A Time Value │
│                                                        S1310       │
└─────────────────────────────────────────────────────────────────┘
                                 │
                                 ▽
┌─────────────────────────────────────────────────────────────────┐
│ Perform K-S Test On Information In Time Series Event Data Store,   │
│ Including The Time Values                                          │
│                                                        S1320       │
└─────────────────────────────────────────────────────────────────┘
                                 │
                                 ▽
┌─────────────────────────────────────────────────────────────────┐
│ Compare T-S Test Result With Set Of Known Profiles                │
│ (Machine-Initiated Or Human-Initiated)                            │
│                                                        S1330       │
└─────────────────────────────────────────────────────────────────┘
                                 │
                                 ▽
┌─────────────────────────────────────────────────────────────────┐
│ Output Indication Of Most Likely Matching Profile                 │
│ (Machine-Initiated Or Human-Initiated)                            │
│                                                        S1340       │
└─────────────────────────────────────────────────────────────────┘
```

# FIG. 13

Europäisches
Patentamt

European
Patent Office

Office européen
des brevets

# EUROPEAN SEARCH REPORT

Application Number

EP 17 20 8811

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/295945 A1 (CANZANESE JR RAYMOND JOSEPH [US] ET AL) 15 October 2015 (2015-10-15) * paragraph [0015] - paragraph [0022]; figures 1,2,5,6,10-12 * * paragraph [0053] - paragraph [0066] * * paragraph [0076] - paragraph [0125] * * paragraph [0160] - paragraph [0163] * ----- | 1-15 | INV. G06F21/55 G06F21/56 H04L29/06 |
| X | US 2014/101761 A1 (HARLACHER JAMES [US] ET AL) 10 April 2014 (2014-04-10) * paragraph [0004] - paragraph [0009]; figures 2-6 * * paragraph [0041] - paragraph [0043] * * paragraph [0084] - paragraph [0093] * ----- | 1-15 | |
| X | US 2016/359887 A1 (YADAV NAVINDRA [US] ET AL) 8 December 2016 (2016-12-08) * figures 1,7,8 * * paragraph [0020] - paragraph [0022] * * paragraph [0049] - paragraph [0066] * * paragraph [0095] - paragraph [0100] * ----- | 1-15 | TECHNICAL FIELDS SEARCHED (IPC) G06F H04L |

The present search report has been drawn up for all claims

| Place of search | Date of completion of the search | Examiner |
|---|---|---|
| Munich | 28 February 2018 | Veshi, Erzim |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 343 421 A1**

## ANNEX TO THE EUROPEAN SEARCH REPORT
## ON EUROPEAN PATENT APPLICATION NO.

EP 17 20 8811

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2018

| Patent document cited in search report | | | Publication date | Patent family member(s) | | | Publication date |
|---|---|---|---|---|---|---|---|
| US 2015295945 | A1 | | 15-10-2015 | NONE | | | |
| US 2014101761 | A1 | | 10-04-2014 | US | 2014101761 | A1 | 10-04-2014 |
| | | | | US | 2014101762 | A1 | 10-04-2014 |
| | | | | US | 2014101763 | A1 | 10-04-2014 |
| | | | | US | 2015082433 | A1 | 19-03-2015 |
| | | | | WO | 2014058727 | A1 | 17-04-2014 |
| US 2016359887 | A1 | | 08-12-2016 | NONE | | | |

EPO FORM P0459

For more details about this annex : see Official Journal of the European Patent Office, No. 12/82

25